# EUROPEAN PATENT APPLICATION

(11) **EP 2 270 430 A1**
(43) Date of publication of application: **05.01.2011**
(21) Application number: 10162396.5
(22) Date of filing: 10.05.2010
(51) Int. Cl.: G01C 21/20

(54) **Navigation system and method**

(30) Priority: 29.06.2009 US 493644
(71) Applicant: NCR Corporation, Duluth, Georgia 30096 (US)
(72) Inventor: Forrest, Simon, Dundee, Tayside DD3 6BW (GB); Claessen, Albertus, Oakwood,, GA 30566 (US)
(74) Representative: MacLeod, Roderick William

(57) **Abstract**

A navigation system (10) and method which may be easily and quickly deployed in any environment is described. The system (10) includes a check-in computer (12) for recording destination information of a person upon entry into a building, the person having a destination somewhere in the building, and for storing the destination information in a wireless communicator (50) associated with the person. The system further includes a plurality of navigation aids (40) for receiving the destination information along a route of the person from the wireless communicator (50) when the wireless communicator (50) is presented to the navigation aid (40) by the person and for determining directions to the destination, the navigation aids (40) including a display for displaying the directions to the person.

## Description

There are currently problems with signage in various environments being overly complex as they try to provide a large amount of detail on relatively small signs that can be displayed in corridors. This can lead to small text having to be used to allow all the information to be displayed or only a reduced set of information being displayed on the signs. For instance in a large hospital patients may have to visit a number of doctors and labs for various tests. Routing can become very confusing and cause additional stress for the patient.

Therefore, it would be desirable to provide a navigation system and method to assist visitors in navigating buildings or groups of buildings or a complex including one or more buildings.

According to a first aspect of the invention there is provided a navigation method comprising: recording a destination of a person, the destination being somewhere in a complex, by a check-in computer; storing the destination in a wireless communicator carried by the person; receiving the stored destination from the wireless communicator at a navigation aid; determining directions to the destination by the navigation aid; and providing directions to the person using the navigation aid.

The navigation aid may be wall-mounted, mounted on a pedestal resting on a floor, mounted on a bracket depending from a ceiling, or mounted in any other convenient manner.

According to a second aspect of the invention there is provided a navigation system comprising: a check-in computer for recording destination information of a person upon entry into a building, the person having a destination somewhere in the building, and for storing the destination information in a wireless communicator associated with the person; and a plurality of navigation aids for receiving the destination information along a route of the person from the wireless communicator when the wireless communicator is presented to the navigation aid by the person and for determining directions to the destination; the navigation aids including means for providing directions to the person.

These and other aspects of the present invention will become apparent from the following description, given by way of example, with reference to the accompanying drawings, in which:

Fig. 1 is a block diagram including an example navigation system according to one embodiment of the present invention;

Fig. 2 is a flow diagram illustrating an example check-in process for use with the navigation system of Fig 1; and

Fig. 3 is a flow diagram illustrating an example navigation method using the system of Fig 1.

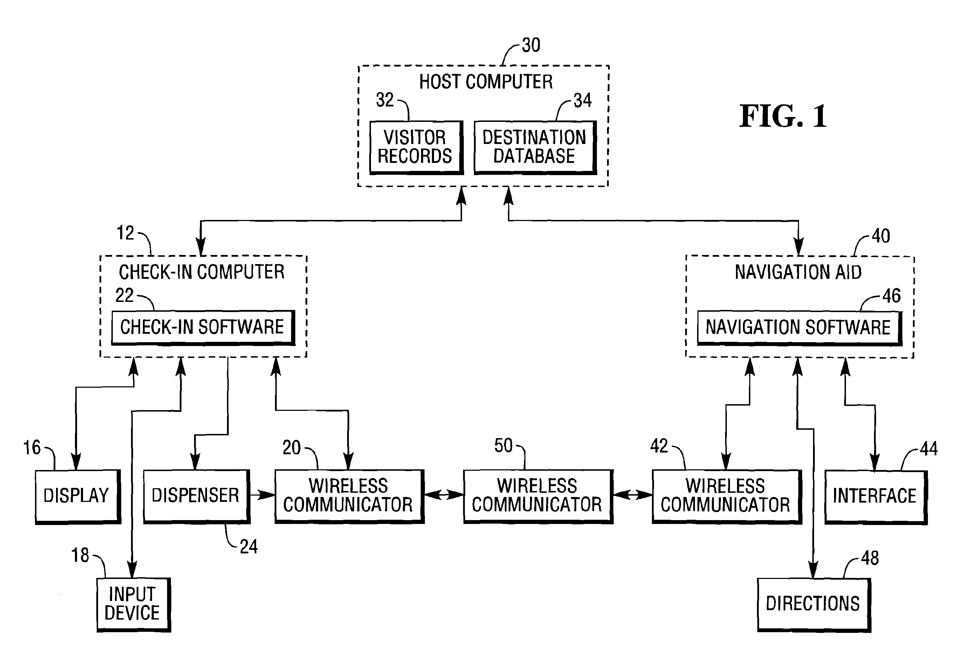

With reference to Fig. 1, an example system 10 primarily includes check-in computer 12.

Check-in computer 12 is coupled to a display 16, input device 18, and wireless communicator 20.

Check-in computer 12 executes check-in software 22, which records destination information for a visitor, patient, customer, or other pedestrian and initializes wireless communicator 50.

Wireless communicator 20 and wireless communicator 50 may be radio frequency (RF) devices, such as Bluetooth, Wi-Fi, near field communication (NFC), ZigBee, and RF identification (RFID) standard devices. Wireless communicator 50 may store destination information.

Alternatively, wireless communicator 50 may store a wireless identifier that may be used to determine destination information from host computer 30. Check-in software 22 obtains the wireless identifier and stores the identifier with destination information in visitor records 32 at host computer 30. During check-in, host computer 30 stores a record of wireless identifiers in visitor records 32. Check-in computer 12 may be coupled to host computer 30 via wired or wireless network connections, or a combination of both. The functions of check-in computer 12 and host computer 30 may be combined into one computer.

In one example embodiment, wireless communicator 50 may be integrated within a cellular telephone or other portable device.

In another example embodiment, wireless communicator 50 may include RFID tags incorporated into tokens or cards. Tokens or cards may include audio generation circuitry, such as speakers, for providing additional direction information, particularly for the visually impaired. Check-in computer 12 may include an RFID token or card dispenser 24. Wireless communicator 20 may be an RFID tag reader. A visitor returns the token or card before leaving the building.

In yet another example, wireless communicator 50 may include a barcode label incorporated into a card or token or displayed by a cellular telephone or other portable device. Wireless communicators 20 and 42 may include barcode readers.

Check-in computer 12 further includes a processor, memory, and may include additional peripherals. Check-in computer 12 may be incorporated into a self-service terminal, such as a kiosk.

System 10 may include more than one check-in computer 12 (optionally located at different areas in the building or complex) to allow customers or visitors to reinitialize wireless communicator 50 with new destinations.

System 10 may be useful in environments such as hospitals, hotels, conference venues, theme parks, or the like that include a large number of destinations and routes through the environment which can be confusing for visitors or customers. System 10 can be easily and quickly deployed in any environment allowing it to be used for short term events such as exhibitions, conventions, or the like to provide better navigation for the visitor or customer.

For this purpose, example system 10 further includes a plurality of navigation aids 40. Navigation aids 40 are coupled to host computer 30 via a network or other wireless or wired communication.

For example, navigation aids 40 may be interconnected with a mesh type wireless connection. The ZigBee specification is particularly amenable to this purpose. The ZigBee specification relates to a suite of high level communication protocols using small, low-power digital radios based on the IEEE 802.15.4-2003 standard for wireless personal area networks (WPANs). Communicated information to and from host computer 30 may hop from one navigation aid to another.

Navigation aids 40 include a processor, memory, wireless communicator 42, and interface 44. Check-in computer 12 may also function as a navigation aid 40.

Navigation aids 40 execute navigation assistance software 46 which automatically provides direction information when a visitor places wireless communicator 50 within communication range of wireless communicator 42. Navigation assistance software 46 is programmed with possible paths from a corresponding navigation aid 40 and directions to a next or final navigation aid 40.

If wireless communicator 50 stores destination information, navigation assistance software 46 obtains the destination information through wireless communicator 42, determines the directions to the next or final navigation aid 40, and causes interface 44 to provide the directions.

Otherwise, navigation assistance software 46 obtains the wireless identifier through wireless communicator 42, obtains the destination information from visitor records 32, determines directions to the next or final navigation aid 40, and causes interface 44 to provide the directions.

Navigation software 46 may alternatively obtain the directions from destination database 34 containing direction information at host computer 30.

Navigation aid 40 may take a variety of forms. For example, navigation aid 40 may include a processor and memory coupled to interface 44 and wireless communicator 42.

Interface 44 may be a speaker for producing audio directions, a display for graphically displaying directions, or a combination of both.

For example, navigation aid 40 may be packaged as a liquid crystal display for mounting on vertical surfaces such as walls including a housing containing a circuit board with the processor, the memory, and wireless communicator 42.

Low cost displays may be used. For example, the display may include electronic paper, which retains information when power is removed.

Navigation aid 40 may be battery powered. For example, the battery may include low cost printed battery technology.

The memory may store directions 48 including possible paths from a corresponding navigation aid 40 and directions to a next or final navigation aid 40.

Directions may change with construction, cleaning, and other obstructions. Navigation aid 40 may receive and store updated directions from host computer 30 or through wireless communicator 42. Alternatively, navigation aid 40 may include a wired connection, such as a universal serial port (USB) connector for downloading updated directions from a portable storage device, such as a flash disk or drive.

Navigation software 46 may also establish live communication with on-site personnel through host computer 30 if the visitor requires help.

In addition to providing direction information or direction information updates to navigation aids 40 and live communication with navigation aids 40, host computer 30 may also track visitors. Navigation aids 40 provide visitor information to host computer 30 each time a visitor's wireless communicator 50 establishes communication with a navigation aid 40.

When a visitor places wireless communicator 50 within communication range of navigation aid 40, navigation software 46 automatically detects wireless communicator 50, determines the visitor's destination, and dynamically configures interface 44 by providing an aural message or a graphic indication, or both. Example directions may include words, arrows, or other indications of direction. Navigation software 46 may display a message including a series of left and/or right turns from a current navigation aid 40.

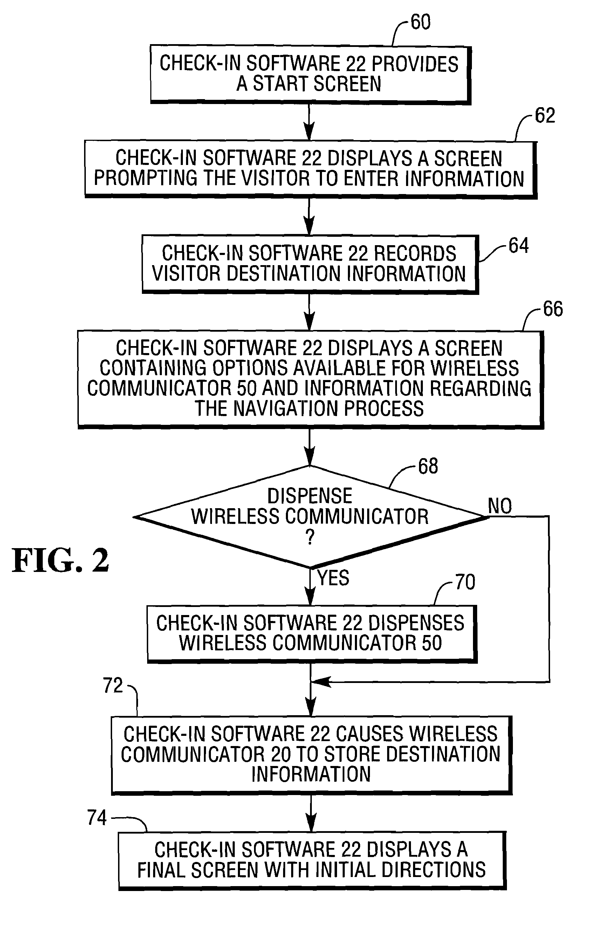

With reference to Fig. 2, an example check-in method is illustrated.

In step 60, check-in software 22 provides a start screen. The start screen may include a web page. Check-in computer 12 may execute web browser software for displaying web pages. A visitor or customer chooses an option to begin the check-in process.

In step 62, check-in software 22 displays a screen prompting the visitor to enter information.

In step 64, check-in software 22 records visitor destination information entered via input device 18. Check-in software 22 may retrieve a previously set up itinerary for the visitor, for example, a number of doctor's appointments in a hospital.

In step 66, check-in software 22 displays a screen containing options available for wireless communicator 50 and information regarding the navigation process and the operation and locations of navigation aids 40. The options may include requesting that check-in software 22 dispense a wireless communicator 50 or requesting permission to use a visitor provided wireless communicator 50.

In step 68, check-in software 22 records a visitor selection of an option. If the visitor selects to receive a dispensed wireless communicator 50, operation proceeds to step 70. Otherwise, operation proceeds to step 72.

In step 70, check-in software 22 dispenses wireless communicator 50, which may include a card or token with an embedded RFID tag.

In step 72, check-in software 22 causes wireless communicator 20 to store destination information in wireless communicator 50. If wireless communicator 50 cannot store destination information, check-in software 22 causes wireless communicator 20 to obtain a wireless identifier from wireless communicator 50 and stores the wireless identifier and the destination information in visitor records 32.

In step 74, check-in software 22 may display a final screen with initial directions.

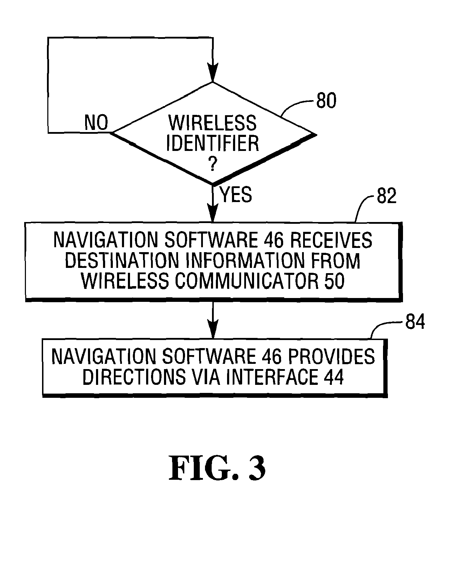

With reference to Fig. 3, an example navigation method is illustrated.

In step 80, navigation software 46 waits for a visitor or customer to present or place wireless communicator 50 within a minimum detection range of wireless communicator 42. For example, the distance may be a few inches.

In step 82, navigation software 46 receives destination information or a wireless identifier from wireless communicator 50.

In step 84, navigation software 46 provides directions via interface 44. For example, navigation software 46 may provide directions in audio format, graphic format, or a combination of both formats.

The visitor follows the directions until the visitor reaches the destination or another navigation aid 40.

Although particular reference has been made to certain embodiments, variations and modifications are also envisioned within the scope of the claims.

## Claims

1. A navigation method comprising:
recording a destination of a person, the destination being somewhere in a complex, by a check-in computer (12);
storing the destination in a wireless communicator (50) carried by the person;
receiving the stored destination from the wireless communicator (50) at a navigation aid (40);
determining directions to the destination by the navigation aid (40); and
providing directions to the person using the navigation aid (40).

2. The method of claim 1, wherein the wireless communicator (50) comprises a radio frequency identification tag.

3. The method of claim 2, further comprising the step of dispensing the radio frequency identification tag to the person by the check-in computer (12).

4. The method of claim 1, wherein the wireless communicator (50) comprises a cellular telephone.

5. The method of claim 1, wherein the wireless communicator (50) comprises a barcode label.

6. The method of any preceding claim, wherein the step of providing directions to the person using the navigation aid (40) comprises displaying the directions to the person by a display of the navigation aid (40).

7. The method of any of claims 1 to 5, wherein the step of providing directions to the person using the navigation aid (40) comprises providing aural directions to the person by audio circuitry of the navigation aid (40).

8. A navigation system (10) comprising:
a check-in computer (12) for recording destination information of a person upon entry into a building, the person having a destination somewhere in the building, and for storing the destination information in a wireless communicator (50) associated with the person; and
a plurality of navigation aids (40) for receiving the destination information along a route of the person from the wireless communicator when the wireless communicator (50) is presented to the navigation aid (40) by the person and for determining directions to the destination;
the navigation aids (40) including means for providing directions to the person.

9. The navigation system of claim 8, wherein the means for providing directions to the person comprises a display for displaying the directions to the person.

10. The navigation system of claim 9, wherein the display comprises electronic paper.

11. The navigation system of claim 8, wherein the means for providing directions to the person comprises audio circuitry for providing directions as sound.

12. The system of any of claims 8 to 11, wherein the navigation aid (40) further comprises a battery for powering the means for providing directions to the person.

13. The system of any of claims 8 to 12, further comprising a wireless network coupling the navigation aids.

14. The system of claim 11, wherein the wireless network is a mesh type network.
